Europäisches Patentamt

European Patent Office

Office européen des brevets

(11) Veröffentlichungsnummer: **0 046 301**
B1

# EUROPÄISCHE PATENTSCHRIFT

(45) Veröffentlichungstag der Patentschrift:
17.11.88

(51) Int. Cl.⁴: **C 04 B 33/18**

(21) Anmeldenummer: 81106408.8

(22) Anmeldetag: 18.08.81

(54) Zusatz für dünnflüssige Quellton- oder Quellton/Zement-Massen.

(30) Priorität: 18.08.80 FR 8018318

(43) Veröffentlichungstag der Anmeldung:
24.02.82 Patentblatt 82/8

(45) Bekanntmachung des Hinweises auf die Patenterteilung:
17.11.88 Patentblatt 88/46

(84) Benannte Vertragsstaaten:
BE DE NL

(56) Entgegenhaltungen:
DE - B - 1 043 912
FR - A - 1 334 965
US - A - 3 917 771

TRANSACTIONS AND JOURNAL OF THE BRITISH CERAMIC SOCIETY; INCORP. BRITISH CERAMIC ABSTRACTS, Band 74, Nr. 8, Dezember 1975, Seite 279. E. ALSTON: "Dispersing agents suitable for the deflocculation of casting slip"
BUILDING SCIENCE ABSTRACTS, Band XL, 3. März 1967, Seite 65, Absätze 3/4. S. ISAKOVSKI: "Influence of bentonite on setting and strength of Portland cement"

(73) Patentinhaber: Société COATEX, Société Anonyme,
35 Cours Aristide Briand, F-69300 Caluire (FR)
Patentinhaber: Société Française des Betonites et Dérivés, 101 Boulevard Haussman, F-75008 Paris (FR)

(72) Erfinder: Rousset, Jacky, Baneins, 01400 Chatillon sur Chalaronne (FR)
Erfinder: Chavrier, Roger Pierre, 6, bd Luce Ste Anne, F-13008 Marseille (FR)

(74) Vertreter: Reinhard, Skuhra, Weise, Leopoldstrasse 51, D-8000 München 40 (DE)

## Beschreibung

Die Erfindung betrifft die Verwendung eines Zusatzes für dünnflüssige Quellton- oder Quellton/Zement-Massen, wie sie gewöhnlich im Bauingenieurwesen, im Hoch- und Tiefbau sowie in Bohrlöchern verwendet werden. Der Zusatz dient dazu, die Filtrate signifikant zu verringern, die Viskosität der Massen zu verringern und zu stabilisieren, die Sedimentation der festen Bestandteile zu begrenzen und die Erstarrung zu verzögern.

Unter dünnflüssigen Quellton- und Quellton/Zement-Massen werden erfindungsgemäss in breitem Sinne Schlicker, Mörtel und plastische Betone verstanden, die gegebenenfalls im Gemisch mit den Grundmaterialien Quelltone enthalten, z.B. Bentonite, die mindestens 60 Gewichtsprozent Montmorillonit enthalten, oder bentonitische Tone, die z.B. 10 bis 60 Gewichtsprozent Montmorillonit enthalten, oder auch Tone auf Basis von Attapulgit, Sepiolit, Illit oder anderen Tonmineralien.

Es ist seit langem bekannt, dass dünnflüssige Quellton/Zement-Massen bei der Anwendung im Bauingenieurwesen, im Hoch- und Tiefbau oder in Bohrlöchern verschiedene Nachteile haben, die im Zeit- und Produktverlust, sowie der schwierigen Handhabung auf der Baustelle begründet sind. Bei der Konstruktion von Dichtungswänden oder -verschalungen, in wasserhaltigen, durchlässigen Böden, bei der Herstellung von armierten, vorfabrizierten Wänden, der Verfestigung und Abdichtung von Böden führt die Verwendung von dünnflüssigen Quellton/Zement-Massen oft zu wesentlichen und hinderlichen Schwierigkeiten, z.B. einer Konsistenzänderung mit vorzeitiger Verdickung, die das Ergebnis eines Filtrationsphänomens durch die permeablen Böden oder auch das Ergebnis eines bedeutenden Masseverlustes durch Infiltration des der Arbeitszone benachbarten Bodens ist.

Der Anwender auf der Baustelle kennt die genannten Nachteile und muss sich ihnen anpassen, da sie die Arbeitszeit und Arbeitskosten beeinflussen. Der Fachmann weiss z.B., dass er in sehr durchlässigen Böden, z.B. in Schwemmland, das bis zu dreifache Volumen der Baugrube an Tonsuspension benötigt. Seit vielen Jahren wird deshalb nach Mitteln geforscht, die die Herstellung dünnflüssiger Quellton/Zement-Massen mit verbesserten Eigenschaften ermöglichen, z.B. wenig Filtraten, einer zeitlich konstanten niedrigen Viskosität, einer begrenzten Sedimentation der festen Bestandteile und einer verzögerten Erstarrung. Obwohl zahlreiche Untersuchungen durchgeführt worden sind, befasst sich die einschlägige Literatur im wesentlichen nur mit Abbindeverzögerern. Als praktische Massnahme ist z.B. der Zusatz von Abbindeverzögerern zu Betonen beschrieben, üblicherweise als Lösungen in dem Anmachwasser für die Betone, mit dem Ziel einer Modifizierung der Hydratationsgeschwindigkeit der Zementbestandteile. So sind z.B. in der FR-PS 1 437 173 Zusammensetzungen beschrieben, die ein lösliches Sulfat und einen Abbindeverzögerer enthalten, z.B. eine Lignosulfon-, Glucon-, Adipin-, Tetrahydroxyadipin- oder Salicylsäure oder ein Salz dieser Säuren. In demselben Sinne und in Verfolgung desselben Zieles ist in der FR-PS 2 115 751 ein Abbindeverzögerer für hydraulische Bindemittel auf Basis von Klinker und/oder Hochofenschlacke beschrieben, der aus Polyphenolen besteht, die durch Extraktion von Tanninen des Catechintyps gewonnen wurden.

Alle diese Zusätze erweisen sich als wirksam, wenn es sich darum handelt, das Abbinden eines hydraulischen Bindemittels zu verzögern oder es flüssiger zu machen, ohne seine mechanischen Eigenschaften zu beeinträchtigen, insbesondere bei technischen Anwendungen des hydraulischen Bindemittels, in denen es z.B. gepumpt oder von einer zentralen Produktionsstätte verteilt wird, beim Betonieren bei erhöhten Aussentemperaturen, beim Betonieren von Anschlüssen, beim Spritzen von Dünnmörtel über grosse Distanz oder in grosser Tiefe.

Aus der DE-B 1 043 912 ist bei einem Verfahren zur Verminderung des Feuchtigkeitsgehaltes von Schlämmen, die silikatische Tonminerale enthalten, zur Erzielung einer gleichbleibenden Viskosität bekannt, viskositäts-vermindernde Stoffe zuzusetzen. Den Schlämmen werden praktisch hydroxylionenfreie Salze oder salzartige Verbindungen, insbesondere die Alkali- oder Ammoniumsalze von organischen Polysäuren zugesetzt, deren Polymerisationsgrad zwischen 70 und 170 liegt. Dieser Polymerisationsgrad entspricht einem Bereich für das Molekulargewicht zwischen 5040 und 12 240. Für das offenbarte Verfahren ist es wichtig, dass der Polymerisationsgrad der polymerisierten Verbindungen genau in dem angegebenen Bereich bleibt, da bei höher oder geringer polymerisierten Verbindungen die Verflüssigungswirkung zurückgeht und sich sogar bis zum verdikkenden Effekt umkehren kann.

Im «Journal of Petroleum Technology» von Juni 1980, Seiten 950 bis 956 ist in einem Artikel über die «High-Temperature Stabilisation of Drilling Fluids With a Low-Molecular-Weight Copolymer» berichtet. Da sich die bekannten Zusätze, wie Calcium- oder Ferrochromlignonsulfat, als nicht geeignet erwiesen hatten, die Ausflockung der Bohrflüssigkeiten bei den hohen, in Bohrlöchern auftretenden Temperaturen von 120 bis 230°C zu verhindern, wurden neue Zusätze gesucht. Als am geeignetsten für den angegebenen Zweck erwies sich ein Copolymerisat aus sulfoniertem Styrol und Maleinanhydrid. Der Einsatzzweck ist somit ein völlig anderer als in der vorliegenden Anmeldung.

Der Erfindung liegt die Aufgabe zugrunde, einen Zusatz für dünnflüssige Quellton- oder Quellton-Zement-Massen der gattungsgemässen Art zu verwenden, der in sich die Eigenschaften einer starken Verringerung der Filtrate, einer niedrigen und zeitlich konstanten Viskosität, einer begrenzten Sedimentation der festen Bestandteile und eine verzögerte Erstarrung vereinigt.

Erfindungsgemäss wird diese Aufgabe durch das Kennzeichnen des Anspruchs 1 gelöst. Durch die Wahl einer geringer polymerisierten Verbindung geht bei dem erfindungsgemäss verwendeten Zusatz nicht nur die Verflüssigungswirkung nicht zurück, sondern es wird auch unter einer starken Verringerung der Filtrate eine niedrige und zeitlich konstante Viskosität mit einer begrenzten Sedimentation der festen Bestandteile und eine verzögerte Erstarrung gewährleistet.

Die äthylenischen Polymerisate und/oder Copolymerisate werden nach bekannten Verfahren durch radikalische Polymerisation der äthylenischen Säuren in wässrigem oder wässrig-alkoholischem Milieu in Gegenwart von Polymerisationsreglern, z.B. organischen Verbindungen auf Basis von Hydroxylamin, und in Gegenwart von Polymerisationsinitiatoren, z.B. Peroxiden oder Persalzen, wie Wasserstoffperoxid oder Persulfaten, hergestellt. Die äthylenischen Polymerisate und/oder Copolymerisate werden im allgemeinen hergestellt ausgehend von äthylenischen Monomeren einzeln oder im Gemisch, z.B. von Acryl-, Methacryl-, Itacon-, Malein-, Fumar- oder Methallylsulfonsäure oder den Methyl-, Äthyl-, Propyl-, Isopropyl- oder Butylestern dieser Säuren. Es hat sich gezeigt, dass die Gegenwart dieser Ester selbst in geringer Menge die Eigenschaften des Zusatzes verbessert.

Im Falle der Herstellung der Polymerisate und/oder Copolymerisate durch bekannte radikalische Polymerisation in wässrig-alkoholischem Medium wird als Alkohol z.B. Methanol, Äthanol, Propanol, Isopropanol oder Butanol verwendet. Nach der radikalischen Polymerisation in Gegenwart bekannter Regulatoren und Initiatoren wird die erhaltene wässrige Lösung des Polymerisats mit einem geeigneten Mittel neutralisiert, z.B. Natrium-, Kalium-, Ammonium- oder Lithiumhydroxid oder einem primären, sekundären oder tertiären, aliphatischen oder cyclischen Amin, z.B. Mono-, Di- oder Triäthanolamin, Mono-, Di- oder Triäthylamin, Cyclohexylamin oder Methylcyclohexylamin.

Die neutralisierte wässrige Lösung des Polymerisats kann als solche als Filtrat-verringernder Zusatz verwendet werden, jedoch kann man sie auch nach bekannten Methoden behandeln, um die wässrige Phase abzutrennen und das neutralisierte äthylenische Polymerisat und/oder Copolymerisat in Form eines feinen Pulvers zu isolieren, das dann in dieser Erscheinungsform als filtratreduzierender Zusatz für dünnflüssige Quellton/Zement-Massen eingesetzt werden kann.

Im allgemeinen enthalten die Massen 5 bis 600, vorzugsweise 25 bis 400 kg/m$^3$ Quelltone, 40 bis 2000, vorzugsweise 80 bis 400 kg/m$^3$ Zement sowie gegebenenfalls Zuschläge verschiedenen Ursprungs und unterschiedlicher Grösse.

Die in den Massen verwendeten Zemente sind gewöhnlich von bekannter Art, z.B. Schlackenzemente, die gegenüber aggressiven wässrigen Medien resistent sind, z.B. gegenüber Sulfatlösungen oder Meerwasser.

Die Menge des den erfindungsgemässen Quellton/Zement-Massen einverleibten Zusatzes beträgt 0,01 bis 10, vorzugsweise 0,5 bis 2 Gewichtsprozent Trockenmasse, bezogen auf den vorhandenen Quellton.

Der erfindungsgemäss verwendete Zusatz kann den Quellton- oder Quellton/Zement-Massen auf verschiedene Weise einverleibt werden. Zunächst kann er dem Quellton in irgendeinem Stadium seiner Herstellung einverleibt werden, worauf man diesen Ton zur Herstellung der erfindungsgemässen Massen verwendet. Er kann aber auch dem Anmachwasser für die Massen oder einem vorher hergestellten Quelltongel zugesetzt werden. In diesem Fall wird der Zement zu dem Bentonitgel gegeben. Schliesslich kann der Zusatz in die bereits hergestellte Quellton/Zement-Masse eingemischt werden.

Es wurde gefunden, dass der erfindungsgemäss verwendete Zusatz den Quellton/Zement-Massen ausserordentlich verbesserte Fliessfähigkeit, Stabilität, Homogenität, Handhabbarkeit sowie Kolmatierungseigenschaften bei verringerten Filtraten verleiht. Es ist vor allem überraschend, dass der erfindungsgemäss verwendete Zusatz innerhalb der genannten geringen Gewichtskonzentrationen bei ruhenden Massen praktisch kein Ausschwitzen, keine Entmischung der Zementteilchen, eine wesentlich verbesserte Fliessflähigkeit, die niedrig und zeitlich stabil bleibt, sowie eine Reduktion der Filtrate von 60 bis 90% nach der Norm API RP 13 B bewirkt.

Überraschenderweise wurde ausserdem festgestellt, dass der erfindungsgemäss verwendete Zusatz die Eigenschaft hat, die mechanischen Eigenschaften der Massen nach ihrer Härtung sowie die Dichtungseigenschaften der mit Hilfe der Massen hergestellten Bauwerke zu verbessern, was auf die ausgezeichnete Homogenität zurückzuführen ist, die ihnen durch den Zusatz verliehen wird.

Die folgenden Beispiele erläutern die Erfindung.

Beispiel 1

Es wird der Einfluss eines alkalischen Polyacrylats als Zusatz zu dünnflüssigen Bentonit/Zement-Massen untersucht, die steigende Mengen des Zusatzes von 0 bis 4 Gewichtsprozent als Handelsprodukt mit einem Trockengehalt von 40%, bezogen auf Bentonit, enthalten. Der Filtrat-reduzierende Zusatz ist erhalten worden durch radikalische Polymerisation von Acrylsäure nach bekannten Methoden in Wasser/Isopropanol.

Die von Isopropanol befreite und mit Natriumhydroxid neutralisierte wässrige Lösung des Acrylpolymerisats hat einen Trockengehalt von 40% und eine Dichte von 1,3. Bei der Gelpermeationschromatographie wird ein mittleres Molekulargewicht des Polymerisats von 3000 ermittelt.

Hierauf stellt man eine Quellton/Zement-Masse her, indem man in ein 5-Liter-Becherglas 2000 g Wasser und 60 g Bentonit (Bentonil C.V. 15, hergestellt aus einem Bentonit von der Insel Kimolos) bei 15°C einbringt und die erhaltene Suspension 5 Minuten mit einem Rayneri-Rührer, der eine zentripetale Turbine von 50 mm Durchmesser aufweist, mit 2000 U/min gerührt. Nach 1stündigem Stehenlassen des Bentonitgels gibt man den erfindungsgemässen Zusatz in Form einer wässrigen Lösung mit einem Trockengehalt von 40% zu und rührt das Gemisch 2 Minuten. Schliesslich versetzt man das 7 Minuten gerührte Bentonitgel mit 400 g Zement CLK 45, der aus 20% Klinker und 80% Schlacke besteht.

Die erhaltene Bentonit/Zement-Masse hat einen Zement (C)/Wasser (E)-Wert von 0,2.

Der erfindungsgemäss verwendete Zusatz wird den Bentonitgelen in steigenden Konzentrationen von 0 bis 4 Gewichtsprozent, als 40prozentiges Produkt, bezogen auf Bentonit, zugesetzt. Hierbei dient der Versuch 1 als Vergleichsversuch, in dem die Bentonit/Zement-Masse keinen Zusatz enthält, während die Versuche 2 bis 5 die Erfindung erläutern. Die verschiedenen Bentonitgele werden vor und nach der Zugabe des erfindungsgemäss verwendeten Zusatzes und nach Zugabe des Zements verschiedenen Kontrollen unterworfen, z.B. hinsichtlich der Marsh-Viskosität des Filtrats und des Kuchens API, des Ausschwitzens und der Erstarrungszeit, entsprechend einer Marsh-Viskosität von 1 Minute 30 Sekunden, wobei die Masse mit 400 bis 600 U/min langsam gerührt wird.

Die Messung der Marsh-Viskosität erfolgt in einer Vorrichtung gleichen Namens, die aus einem Kegel mit einem Fassungsvermögen von 1500 cm$^3$ besteht, der in seinem unteren Teil einen Ansatzstutzen von 4,74 mm Durchmesser ($^3/_{16}$ Inch) und einen mit cm$^3$-Skala versehenen Becher aufweist, der den Ansatzstutzen abschliesst. Der Kegel wird mit einer Suspension gefüllt, die vorher durch ein 10 Mesh-Maschensieb filtriert worden ist. Man bestimmt die Zeit, die zum Ausfliessen von 946 cm$^3$ ($^1/_4$ US Gallone) der Suspension erforderlich ist. Diese Zeit (ausgedrückt in Sekunden) wird als Marsh-Viskosität bezeichnet. Das Filtrat und der Kuchen werden nach der US-Norm API Nr. RP 13 B bemessen. Das Schwitzwasser wird mit einem 1 Liter-Messzylinder gemessen, in den eine dünnflüssige Bentonit/Zement-Masse eingebracht wird. Nach 4stündigem Ruhen misst man die Verschiebung der Trennfläche zwischen der Suspension und der wässrigen Phase, wobei das Ausschwitzen den Prozentsatz des Volumens der wässrigen Phase, bezogen auf das Anfangsvolumen der Masse, ausdrückt.

Alle mit den verschiedenen Bentonitgelen vor und nach der Zementzugabe nach den vorstehend genannten Methoden erhaltenen Ergebnisse sind in der folgenden Tabelle I genannt.

Tabelle I

|  | Versuch 1 | Versuch 2 | Versuch 3 | Versuch 4 | Versuch 5 |
|---|---|---|---|---|---|
| Erfindungsgemäss verwendeter Zusatz | 0% | 1% | 2% | 3% | 4% |
| Bentonitgel allein | | | | | |
| Marsh-Viskosität, s | 33,5 | 31 | 30 | 29 | 28,5 |
| Filtrat API, cm$^3$ | 14 | 13,5 | 13 | 12 | 11,5 |
| nach Zugabe von 200 g/Liter Zement CLK 45 | | | | | |
| Marsh-Viskosität, s | 43 | 41 | 38 | 37 | 36 |
| Filtrat API, cm$^3$ | 195 | 135 | 95 | 65 | 45 |
| Kuchendicke, mm | 9 | 6,5 | 4,5 | 2,5 | 2,1 |
| Ausschwitzen, % | 1 | 0 | 0 | 0 | 0 |
| Erstarrungszeit, h | 4–5 | 6–7 | 8–9 | 10–12 | >20 |

Bei Verwendung des Zusatzes in steigender Menge wird somit eine beträchtliche Verringerung des Filtrats erzielt, wie die API-Messung zeigt. Bei Verwendung des Zusatzes in Quellton/Zement-Massen ist auch das Ausschwitzen praktisch null. Die Marsh-Viskosität wird nach Zugabe des Zusatzes auf einen Wert verringert, der die Arbeitsbedingungen wesentlich erleichtert. Auch die Erhärtungszeit wird wesentlich verlängert, so dass die Massen auf der Baustelle wesentlich leichter gehandhabt werden können.

Beispiel 2

Dieses Beispiel erläutert die allgemeine Wirkung des erfindungsgemäss verwendeten Zusatzes, unabhängig von der Art des verwendeten Quelltones. In diesem Fall wird der Quellton aus einem behandelten Bayerischen Bentonit (Bentonil C für Bohrlöcher) hergestellt. Der erfindungsgemäss verwendete Zusatz sowie die Verfahrensbedingungen und Kontrollmethoden entsprechen denen von Beispiel 1.

Wie in Beispiel 1 wird der erfindungsgemäss verwendete Zusatz mit steigenden Konzentrationen von 0 bis 4 Gewichtsprozent als Handelsprodukt mit einem Trockengehalt von 40%, bezogen auf den Quellton, zugegeben. Versuch 6 stellt einen Vergleichsversuch dar, in dem kein Zusatz verwendet wird, während die Versuche 7 bis 10 die Erfindung erläutern. Die erhaltenen Ergebnisse sind in Tabelle II zusammengestellt.

Tabelle II

| | Versuch 6 | Versuch 7 | Versuch 8 | Versuch 9 | Versuch 10 |
|---|---|---|---|---|---|
| Erfindungsgemäss verwendeter Zusatz | 0% | 1% | 2% | 3% | 4% |
| Bentonitgel allein (nach 24 h Ruhen) | | | | | |
| Marsh-Viskosität, s | 42 | 34 | 33 | 32 | 32 |
| Filtrat API, cm$^3$ | 27 | 19 | 18 | 18 | 17 |
| nach Zugabe von 200 g/Liter Zement CLK 45 | | | | | |
| Marsh-Viskosität, s | 35 | 35 | 34 | 33 | 33 |
| Filtrat API, cm$^3$ nach 30 min | 155 | 82 | 78 | 72 | 70 |
| Kuchendicke, mm | 7,5 | 4 | 3 | 2,8 | 2,5 |
| Ausschwitzen, % | 2,5 | 1,5 | 1,0 | 0,8 | 0,5 |
| Erstarrungszeit, h | 4–5 | 7–8 | 9–10 | 15 | 25 |

Wie in Beispiel 1 ist eine wesentliche Verringerung des Filtrats und des Ausschwitzens sowie eine Verlängerung der Erstarrungszeit zu beobachten. Alle diese verbesserten Eigenschaften zeigen den günstigen Einfluss des erfindungsgemäss verwendeten Zusatzes.

Beispiel 3

Dieses Beispiel erläutert die Wirkung des erfindungsgemäss verwendeten Zusatzes, der unter den Acrylpolymerisaten und -copolymerisaten ausgewählt ist. Es werden drei Versuche durchgeführt, die mit 11 (Vergleich ohne Zusatz), 12 (mit Natriumpolyacrylat als Zusatz) und 13 (mit einem Natriumsalz eines Acrylcopolymerisats als Zusatz) bezeichnet sind.

Die verwendeten Quelltone sowie die Herstellungsbedingungen, die Anwendung und die Kontrollmethoden entsprechen denen von Beispiel 1. Als erfindungsgemäss verwendeter Zusatz, der in einer Menge von 3 Gewichtsprozent als Handelsprodukt mit einem Trockengehalt von 40%, bezogen auf den Quellton, verwendet wird, dienen:
in Versuch 12: das Polymerisat von Beispiel 1;
in Versuch 13: das Natriumsalz eines Acrylsäure-Methacrylsäure/Methallylsulfonsäure-Copolymerisats mit einem mittleren Molekulargewicht von 3000, das nach bekannten Methoden durch radikalische Copolymerisation in Wasser/Isopropanol erhalten worden ist.
Alle mit den verschiedenen Bentonitgelen vor und nach des Zusatzes von 200 g/Liter Zement CLK 45 erhaltenen Ergebnisse sind in der folgenden Tabelle III zusammengestellt.

Tabelle III

| | Versuch | Versuch 12 Acrylpolymerisat, Trockengehalt 40% | Versuch 13 Acrylcopolymerisat, Trockengehalt 40% |
|---|---|---|---|
| Erfindungsgemäss verwendeter Zusatz | 0% | 3% | 3% |
| Bentonitgel allein | | | |
| Marsh-Viskosität, s | 33,5 | 29 | 30 |
| Filtrat API, cm$^3$ | 14 | 12 | 13 |

Tabelle III (Fortsetzung)

| | Versuch | Versuch 12 Acrylpoly-merisat, Trocken-gehalt 40% | Versuch 13 Acrylco-polymerisat, Trocken-gehalt 40% |
|---|---|---|---|
| | | nach Zugabe von 200 g/Liter Zement CLK 45 | |
| Marsh-Viskosität, s | 43 | 39 | 39 |
| Filtrat API, cm³ nach 30 min | 195 | 65 | 80 |
| Kuchendicke, mm | 10 | 2,5 | 4,5 |
| Ausschwitzen, % | 1,5 | 0 | 0 |
| Erstarrungszeit, h | 4–5 | 10–12 | 8–10 |

Es zeigt sich, dass bei Verwendung eines Acrylcopolymerisats als Zusatz praktisch dieselben Effekte erzielt werden wie bei Verwendung eines Acrylpolymerisats, d.h. ein wesentlich verringertes Filtrat, praktisch kein Schwitzwasser und eine verringerte Marsh-Viskosität.

Beispiel 4

In den Versuchen 14 bis 21 ist gezeigt, dass der erfindungsgemäss verwendete Zusatz (Versuch 15) den dünnflüssigen Quellton/Zement-Massen niedrige und stabile Viskositäten, reduzierte Filtrate, verringerte Kuchen-Schichtdicken und wesentlich verbesserte Anwendungseigenschaften verleihen als herkömmliche Zusätze, wie Calciumlignosulfit (Versuche 16 bis 17), Ferrochromlignosulfonat (Versuche 18 und 19) oder sulfoniertes Polynaphthylmethan (Versuche 20 und 21). In allen Versuchen werden der Quellton und die Verfahrensweise von Beispiel 1 angewandt. Das Herstellungsverfahren für die Massen und die Kontrollmethoden entsprechen denen von Beispiel 1. Schliesslich ist auch der erfindungsgemäss verwendete Zusatz in Versuch 15 derselbe wie in Beispiel 1.

Alle mit Bentonitgel sowie mit den Massen nach Zugabe von 200 g/Liter Zement CLK 45 erhaltenen Ergebnisse sind in der folgenden Tabelle IV zusammengestellt.

Tabelle IV

| | Vergleichs-versuch 14 | Ver-such 15 | Ver-such 16 | Ver-such 17 | Ver-such 18 | Ver-such 19 | Ver-such 20 | Ver-such 21 |
|---|---|---|---|---|---|---|---|---|
| Zusatz | kein Zusatz | Natrium-polyacry-lat, Trocken-gehalt | Calciumligno-sulfit, Trocken-gehalt 25% | | Ferrochrom-lignosulfonat-pulver, Trocken-gehalt 95% | | Sulfoniertes Po-lynaphthylme-than, Trockenge-halt 40% | |
| Konzentration des Handels-produkts, % | 0 | 3 | 10 | 20 | 3,5 | 7 | 10 | 20 |
| | Bentonitgel allein | | | | | | | |
| Marsh-Viskosität, s | 33,5 | 29 | 31,5 | 31 | 31 | 31 | 31,5 | 31,5 |
| | nach Zusatz von 200 g/Liter Zement CLK 45 | | | | | | | |
| Marsh-Viskosität, s | 43 | 37 | 43 | 52 | 42 | 40 | 44 | 38 |
| Filtrat API, cm³ nach 30 min | 195 | 65 | 130 | 95 | 130 | 110 | 105 | 78 |
| Kuchendicke, mm | 10 | 2,5 | 7,5 | 4,5 | 7,5 | 5 | 6 | 3,5 |
| Ausschwitzen, % | 1,5 | 0 | 0 | 0 | 0 | 0 | 0 | 0 |
| Erstarrungszeit, h | 4–5 | 10–12 | 16 | 30 | 15 | 8 | 6 | 8 |

Die Ergebnisse zeigen die wesentlich verbesserten Eigenschaften der Massen, denen der erfindungsgemäss zu verwendende Zusatz einverleibt worden ist, insbesondere hinsichtlich der Verringerung der Filtrate.

**Patentansprüche**

1. Verwendung von alkalischem Polymerisat und/oder Copolymerisat der ethylenischen Säuren Acryl-, Methacryl-, Itacon-, Malein- oder Methallylsulfonsäure oder deren Estern mit einem Molekulargewicht von 500 bis 6000, ausgenommen den Bereich von 5040 bis 6000 als Zusatz für dünnflüssige Quellton- oder Quellton/Zement-Massen zur Verringerung des Filtrats, Verringerung und Stabilisierung der Viskosität, Verzögerung der Erstarrung, Begrenzung des Ausschwitzens und der Sedimentation der festen Bestandteile.

2. Verwendung nach Anspruch 1, dadurch gekennzeichnet, dass das alkalische Polymerisat und/oder Copolymerisat als Natrium-, Kalium-, Ammonium- oder Lithiumsalz vorliegt oder mit primären, sekundären oder tertiären Aminen neutralisiert worden ist.

3. Verwendung nach Anspruch 1 oder 2, dadurch gekennzeichnet, dass das Polymerisat und/oder Copolymerisat durch radikalische Polymerisation und/oder Copolymerisation in wässrig-alkoholischem Medium erhalten worden ist.

4. Verwendung nach Anspruch 3, dadurch gekennzeichnet, dass die Polymerisation und/oder Copolymerisation in Gegenwart eines Alkohols aus der Gruppe Methanol, Ethanol, Propanol, Isopropanol und Butanol durchgeführt worden ist.

5. Dünnflüssige Quellton- und Quellton/Zement-Massen mit einem Zusatz nach einem der Ansprüche 1 bis 4, dadurch gekennzeichnet, dass sie 5 bis 600, vorzugsweise 25 bis 400 kg/m³ Quelltone und 40 bis 2000, vorzugsweise 80 bis 400 kg/m³ Zemente enthalten.

6. Massen nach Anspruch 5, dadurch gekennzeichnet, dass sie den Zusatz nach einem der Ansprüche 1 bis 4 in einer Menge von 0,01 bis 10, vorzugsweise 0,5 bis 2 Gew.-% Trockenmasse, bezogen auf das Gewicht der Quelltone, enthalten.

**Claims**

1. Use of an alkaline polymer and/or copolymer of ethylenic acids, consisting of acrylic acid, methacrylic acid, itaconic acid, maleic acid or methallylsulfonic acid or esters thereof, having a molecular weight of 500 to 6000, except the range of 5040 to 6000, as an additive for mortars of swelling clays and mixtures of swelling clays and cement for reducing the filtrate, reducing and stabilizing the viscosity, retarding the solidification and limiting the exudation and sedimentation of solid components.

2. Use according to claim 1, characterized in that the alkaline polymer and/or copolymer is a salt, formed with sodium, potassium, ammonium or lithium or was neutralized with primary, secondary or tertiary amines.

3. Use according to claim 1 or 2, characterized in that the polymer and/or the copolymer was obtained by radical polymerization and/or copolymerization in an aqueous-alcoholic medium.

4. Use according to claim 3, characterized in that the polymerization and/or the copolymerization was carried out in the presence of an alcohol from the group consisting of methanol, ethanol, propanol, isopropanol and butanol.

5. Mortars of swelling clays and mixtures of swelling clays and cement with an additive according to any one of claims 1 to 4, characterized in that they contain 5 to 600, preferably 25 to 400 kg/m³ swelling clays and 40 to 2000, preferably 80 to 400 kg/m³ cements.

6. Mortars according to claim 5, characterized in that they contain the additive according to any one of claims 1 to 4 in a proportion of 0.01 to 10, preferably 0.5 to 2 percent by weight based on the weight of the swelling clays.

**Revendications**

1. Utilisation de polymère et/ou copolymère alcalin des acides éthyléniques, l'acide acrylique, l'acide méthacrylique, l'acide itaconique, l'acide maléique ou l'acide méthallylsulfonique, ou de leurs esters, ayant un poids moléculaire de 500 à 6000, à l'exception de la gamme de 5040 à 6000, comme additif pour des coulis d'argile gonflante ou d'argile gonflante/ciment, pour diminuer le filtrat, réduire et stabiliser la viscosité, ralentir la solidification, limiter le ressuage et la sédimentation des éléments solides.

2. Utilisation suivant la revendication 1, caractérisée en ce que le polymère et/ou copolymère alcalin se présente sous la forme d'un sel de sodium, de potassium, d'ammonium ou de lithium ou a été neutralisé par des amines primaires, secondaires ou tertiaires.

3. Utilisation suivant l'une ou l'autre des revendications 1 et 2, caractérisée en ce que le polymère et/ou copolymère a été obtenu par polymérisation et/ou copolymérisation radicalaire dans un milieu alcoolique-aqueux.

4. Utilisation suivant la revendication 3, caractérisée en ce que la polymérisation et/ou copolymérisation a été effectuée en présence d'un alcool du groupe du méthanol, de l'éthanol, du propanol, de l'isopropanol et du butanol.

5. Coulis d'argile gonflante et d'argile gonflante/ciment contenant un additif suivant l'une des revendications 1 à 4, caractérisés en ce qu'ils contiennent 5 à 600, de préférence 25 à 400, kg/m³ d'argiles gonflantes et 40 à 2000, de préférence 80 à 400, kg/m³ de ciments.

6. Coulis suivant la revendication 5, caractérisés en ce qu'ils contiennent l'additif suivant l'une des revendications 1 à 4 en une proportion de 0,01 à 10, de préférence de 0,5 à 2, % en poids de matière sèche, par rapport au poids des argiles gonflantes.